# EUROPÄISCHE PATENTSCHRIFT

(11) **EP 0 557 733 B1**
(45) Veröffentlichungstag und Bekanntmachung des Hinweises auf die Patenterteilung: **31.01.1996**
(21) Anmeldenummer: 93101353.6
(22) Anmeldetag: 29.01.1993
(51) Int. Cl.: B60R 19/56

(54) **Unterfahrschutz für Lkw**
Underrun guard for trucks
Anti-encastrement pour camion

(30) Priorität: 27.02.1992 DE 4206022
(43) Veröffentlichungstag der Anmeldung: 01.09.1993
(73) Patentinhaber: MAN NUTZFAHRZEUGE AG, D-80976 München (DE)
(72) Erfinder: Rieck, Gerhard, Dipl.-Ing., W-8000 München 60 (DE); Mertens, Armin, W-8000 München 50 (DE); Hinze, Peter, W-8064 Altomünster (DE)

(56) Entgegenhaltungen:
- DE-A- 1 931 844
- DE-A- 2 438 828
- DE-A- 2 843 670
- DE-A- 3 808 812
- DE-A- 3 808 813
- GB-A- 2 090 204
- US-A- 4 105 237

## Beschreibung

Die Erfindung bezieht sich auf eine Aufprallvorrichtung für Nutzfahrzeuge gemäß dem Oberbegriff des Anspruches 1.

Derartige Vorrichtungen sind aus der DE 38 08 812 A1 wie auch aus der DE 38 08 813 A1 bekannt. Aus der DE 38 08 813 A1 ist zunächst zu dem konventionellen Stoßfänger unterhalb diesem ein Unterfahrschutz zu entnehmen, der energieabsorbierend ausgebildet ist, während die DE 38 08 812 A1 einen Unterfahrschutz mit kraftablenkenden Elementen aufzeigt. Weiterhin ist aus der DE 28 43 670 A1 ein Unterfahrschutz im Heckbereich eines Lastkraftwagens zu entnehmen, der mittels eines Parallelogrammlenkergetriebes fahrzeugeinwärts höhenverstellbar ist.

Der Erfindung liegt die Aufgabe zugrunde, einen auf engstem Raum optimierten, auf nahezu konstanter Horizontalebene einrückfähigen, höhenverstellbaren, im Kollisionsfall auch energievernichtend wirkenden, einen oberen Stoßfänger ergänzenden Unterfahrschutz mit einfachen Mitteln zu schaffen.

Diese Aufgabe wird erfindungsgemäß durch die Merkmale des Anspruches 1 gelöst.

Solcherart wird aufgrund entsprechend ausgestalteter und angeordneter - unteren Stoßfänger und Rahmen des Nutzfahrzeuges gelenkig miteinander verbindender - Lenker die Möglichkeit geschaffen, den unterhalb eines oberen Stoßfängers angeordneten unteren Stoßfänger über eine längere Strecke nahezu horizontal zu führen, so daß im Kollisionsfall, beispielsweise mit einem Pkw, unter Absorbierung von Aufprallenergie, über eine Wegstrecke L, beispielsweise etwa der Knautschzone eines Pkw entsprechend, eine längere Energievernichtungsstrecke zur Verfügung steht. Infolge der speziellen, paarweisen und gegebenenfalls distanzgleichen Vertikalanordnung der Drehachsen der Lenker, ist eine über den gesamten Verschwenkungsweg des unteren Stoßfängers beibehaltbare Vertikallage dessen frontaler Aufprallfläche realisiert. Konstante Vertikallage und längstmögliche Horizontalführung von unterem Stoßfänger und dessen frontaler Aufprallfläche haben den Vorteil, daß im Kollisionsfall der Kollisionspartner nur mit energieabsorptionsfähigen, ebenen Bauteilen konfrontiert wird und zusätzlich nicht unter den als Unterfahrschutz ausgebildeten unteren Stoßfänger geraten kann.

Erst nach Zurücklegen der horizontalen Energievernichtungsstrecke ist der untere Stoßfänger passiv - infolge einer Kollision - oder aktiv - infolge den an ihm angeordneten Zylinder-Kolben-Einheiten - beträchtlich hochziehbar und so in seine Endposition bringbar.

Im Falle des aktiven Hochziehens des unteren Stoßfängers mittels der Zylinder-Kolben-Einheiten ist dieser nicht mehr störend für das Fahren im Gelände, insbesondere auch für das Anfahren von Böschungen. Somit kann eine einzige Einrichtung sowohl für den Energieverzehr bei Aufprall eines Pkw wie auch für die Höhenverstellung bei Gelände- und Böschungsfahrten genutzt werden.

Nach einem weiterführenden Merkmal der Erfindung kann der untere Stoßfänger zusätzlich um eine vertikale Drehachse in horizontaler Ebene verschwenkbar sein. Die vertikale Drehachse kann dabei an einem die unteren Drehachsen der beiden Lenker aufweisenden Lagerbock gegeben sein. Auf diese Weise erfüllt der untere Stoßfänger bei einseitigem Aufprall eines Fahrzeuges auch eine Abweisfunktion, die den Schaden bei einem eventuellen Kollisionspartner weiter eingrenzt.

Nach einer weiteren Variante der Erfindung kann der eine Lenker durch zwei gleichgestaltete Lenker, je einen beiderseits und im Abstand zu der Längsmittelebene des Nutzfahrzeuges angeordnet, gebildet sein. Diese beidseitigen Lenker können an einem an der Quertraverse des Rahmens befestigten Lagerbock in den jeweils unteren der niveauhöheren Drehachsen angelenkt sein, wobei diesen beidseitigen Lenkern ein weiterer mittlerer Lenker, der ebenfalls am rahmenfesten Lagerbock in der oberen der niveauhöheren Drehachsen angelenkt ist, zugeordnet ist. Die beidseitigen Lenker und der mittlere Lenker können anderenends an dem mit dem unteren Stoßfänger verbundenen Lagerbock angelenkt sein. Dieser Lagerbock kann gelenkig um eine vertikale Achse vorschwenkbar mit einem am unteren Stoßfänger befestigten Lagerbock verbunden sein. Je nach Einbausituation können die Lenker verschiedene Formen aufweisen und beispielsweise als Winkelhebel oder dergleichen ausgebildet sein.

Gemäß einer Alternative können die beidseitigen Lenker auch einstückig und der einzelne, mittlere Lenker durch mehrere Lenker, beispielsweise ein Lenkerpaar, ersetzbar sein.

Gemäß einer vorteilhaften Ausgestaltung der Erfindung können die Zylinder-Kolben-Einheiten als hydraulische Teleskopzylinder mit querschnittsmäßig abgestuften Teleskopkolben ausgebildet sein, wobei die Wirklänge der querschnittskleineren Teleskopkolben auf dem vorwiegend horizontal verlaufenden Schwenkweg L - Knautschzone - des Unterfahrschutzes abgestimmt ist. Bei Vorsehen hydraulischer Teleskopzylinder können, zur Begrenzung der Aufprallenergie auf die Zylinder-Kolben-Einheiten, Überdruckventile innerhalb eines die Zylinder-Kolben-Einheiten versorgenden hydraulischen Kreislaufes vorgesehen sein. Den Überdruckventilen können jeweils Drosselventile vorgeschaltet sein. Die vorzugsweise als Teleskopzylinder ausgebildeten Zylinder-Kolben-Einheiten haben neben ihrer Funktion als Verstellantrieb weiterhin die Funktion als Dämpfungselement, wobei in der ersten Stufe die querschnittskleineren Teleskopkolben über das aufprallenergieverzehrende Drosselventil gegen den Widerstand des diesem nachgeschalteten Überdruckventiles wirken. Dies hat den Vorteil, daß die Teleskopzylinder auch über den Kollisionsfall hinaus funktionsfähig bleiben.

Nach einer alternativen Ausführung der Erfindung können als Zylinder-Kolben-Einheiten Knickhebel vorgesehen sein, denen jeweils ein Verstellelement zugeordnet ist. Die Knickhebel können wie die Teleskopzylinder angelenkt und angeordnet sein, derart, daß der untere Stoßfänger im Kollisionsfall unter Absorbierung von Aufprallenergie mittels einer oder mehrerer im Knickhebel vorgesehenen Soll-Deformationsstellen, über eine Wegstrecke L, etwa der Knautschzone eines Pkw entsprechend, auf einer nahezu horizontalen Bahn geführt und anschließend in eine höher gelegene Endposition bewegbar ist.

In weiterer Ausbildung der Erfindung sind dabei die Knickhebel, die einerends schwenkbar an dem Rahmen und andernends schwenkbar mit dem am unteren Stoßfänger befestigten Lagerbock verbunden sind, zweiteilig ausgebildet und um eine mittig angeordnete Achse ausknickbar. An den rahmenwärts gerichteten Enden der Knickhebel sind Ausleger angeordnet, an denen schwenkbar Kolben der an dem Rahmen schwenkbar angeordneten Verstellelemente befestigt sind. Eine solcherart konzipierte Höhenverstellung ist nur bewußt, d.h. vom Fahrer auslösbar. Wenn ein Impuls auf das Verstellelement gegeben wird, entsteht ein Hebelarm am Drehpunkt des mittig geteilten Knickhebels, so daß dieser ausknickt und der untere Stoßfänger auf kurzem Weg in seine obere, für Geländefahrten und Böschungsanfahrten geeignete Position gebracht werden kann.

Der Knickhebel ist mit für den Kollisionsfall vorgesehenen Soll-Deformationsstellen ausgerüstet. Bei einem Auffahrunfall wird die energieverzehrende Vernichtung des Knickhebels bewußt in Kauf genommen.

Die Verstellelemente können hydraulisch, pneumatisch oder elektrisch beaufschlagbar sein.

Gemäß einer weiteren Ausgestaltung der Erfindung können die Knickhebel doppelkegelförmig mit abgestuften Rohrstücken oder als entsprechendes Blechziehteil mit eingebauten Soll-Deformationsstellen ausgebildet sein.

Die Erfindung ist in zwei Ausführungsbeispielen dargestellt und beschrieben.

Es zeigen:
- Fig. 1: eine Aufprallvorrichtung in Wirkstellung in der Seitenansicht,
- Fig. 2: eine Aufprallvorrichtung in Knautschzonen-Endstellung in der Seitenansicht,
- Fig. 3: eine Aufprallvorrichtung in _{"}off road" Stellung in der Seitenansicht,
- Fig. 4: eine Aufprallvorrichtung in der Draufsicht,
- Fig. 5: eine Aufprallvorrichtung mit schräg gestelltem unteren Stoßfänger in der Draufsicht,
- Fig. 6: einen Hydraulikschaltplan,
- Fig. 7: eine Variante der Aufprallvorrichtung in Wirkstellung in der Seitenansicht,
- Fig. 8: eine Variante der Aufprallvorrichtung in Knautschzonen-Endstellung in der Seitenansicht,
- Fig. 9: eine Variante der Aufprallvorrichtung in _{"}off road" Stellung in der Seitenansicht und
- Fig. 10 + 11: ein Deformations-Element als Einzelteil (neu und zerknautscht).

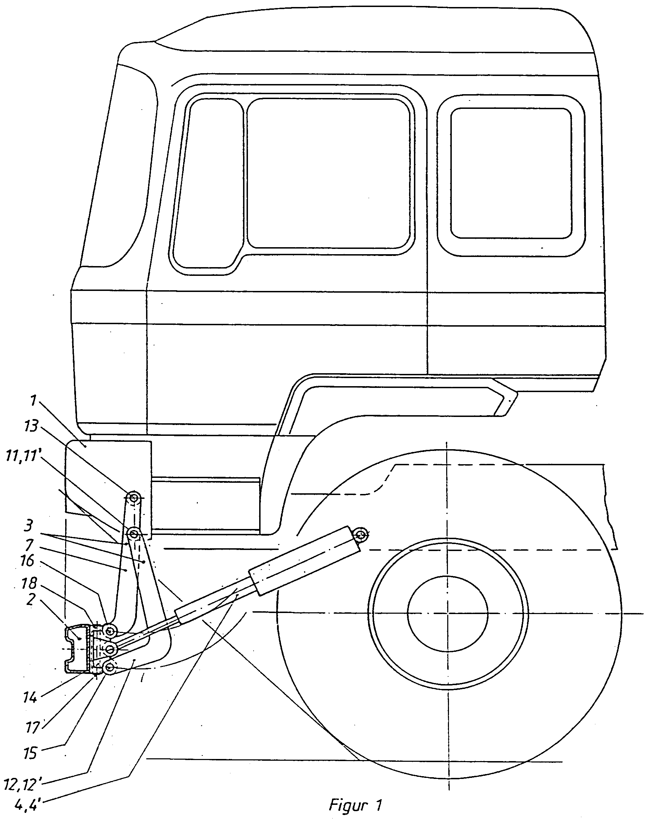

Die Fig. 1 zeigt den vorderen Teil eines Lkw mit einem im unteren Bereich seines Fahrerhauses angebrachten oberen Stoßfänger 1. Unterhalb des oberen Stoßfängers 1 ist ein im Bereich von Pkw-Stoßfängern angeordneter, als Unterfahrschutz ausgebildeter unterer Stoßfänger 2 vorgesehen.

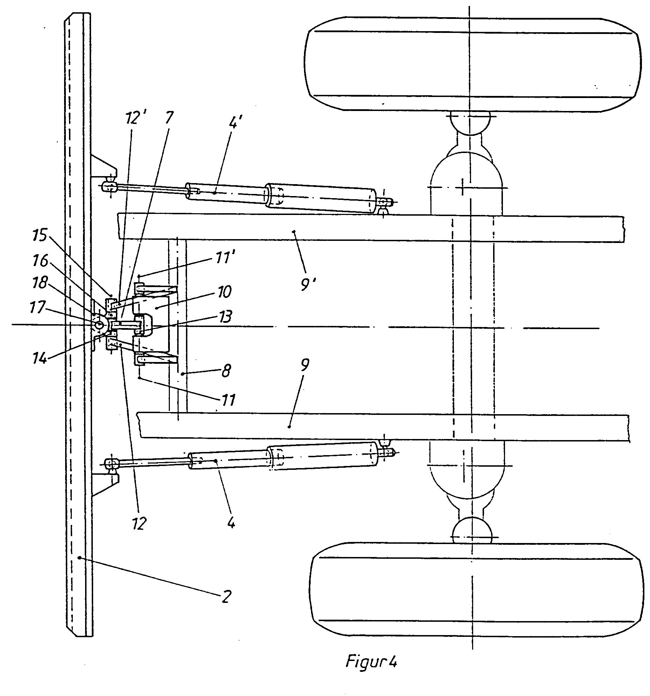

Der untere Stoßfänger 2 ist in dem hier gezeigten Ausführungsbeispiel über an einem Rahmen 9, 9' gelagerten Lenkern 7 bzw. 12, 12' fliegend aufgehängt und fahrzeugeinwärts in eine höhere Position verschwenkbar. Die Lenker 7 bzw. 12, 12' sind an einer zwischen dem Rahmen 9, 9' befestigten Quertraverse 8 - siehe auch Fig. 4 - gelenkig angeordnet. An der Quertraverse 8 ist ein rahmenfester Lagerbock 10 befestigt. In der Drehachse 11, 11' des Lagerbockes 10 sind beiderseits der Längsmittelebene des Fahrzeugs je ein Lenker 12, 12' angeordnet. Nach einer anderen, hier nicht gezeigten Version, können die beiderseitigen Lenker auch einstückig sein.

In der Fahrzeuglängsmittelebene ist ein zu den beiderseitigen Lenkern 12, 12' symmetrischer, mittlerer Lenker 7 in der Drehachse 13 des Lagerbockes 10 angelenkt, wobei die Drehachsen 11', 11' zu der Drehachse 13 in der Vertikalen zueinander beabstandet unterhalb letzterer angeordnet sind. Die Lenker 12, 12' sind andernends in der Drehachse 15 eines mit dem unteren Stoßfänger 2 verbundenen Lagerbockes 14 angelenkt, wie auch der Lenker 7 in einer oberhalb der Drehachse 15 gelegenen, zu dieser in der Vertialen beabstandet angeordneten Drehachse 16 dieses Lagerbockes 14 angelenkt ist. Alternativ kann der mittlere, einzelne Lenker 7 auch aus mehreren Lenkern, beispielsweise einem Lenkerpaar bestehend sein.

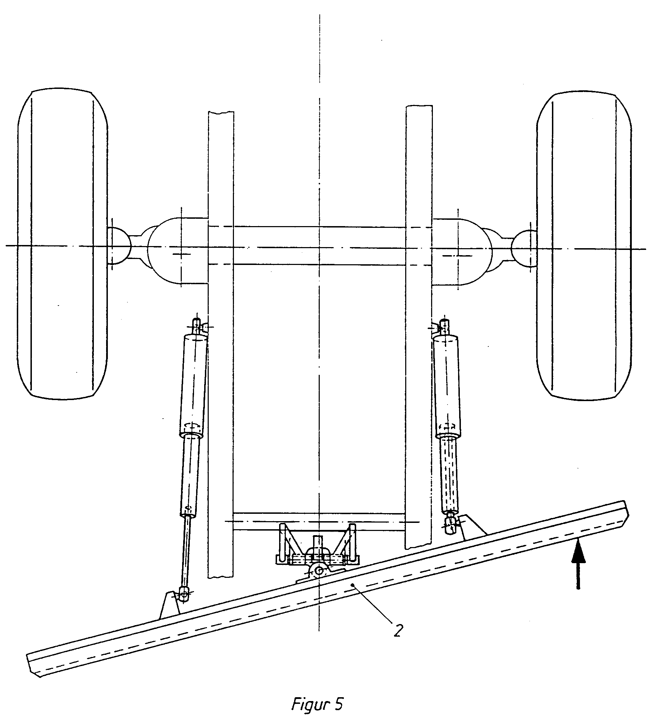

Der Lagerbock 14 ist zusätzlich über eine vertikale Achse 17 gelenkig mit einem am unteren Stoßfänger 2 befestigten Lagerbock 18 verbunden. Im Falle eines einseitig erfolgenden Aufpralles kann somit das kollidierende Gefährt zur Seite abgelenkt werden, wodurch der Schaden weiter eingegrenzt wird (siehe auch Fig. 5).

Gemäß Fig. 4 sind als Antriebselemente für die Höhenverstellung des unteren Stoßfängers 2, gleichzeitig aber auch als Dämpfer dienend, an dem Rahmen 9, 9' Zylinder-Kolben-Einheiten 4, 4' vorgesehen, die einenends an dem Rahmen 9, 9' und andernends an dem unteren Stoßfänger 2 gelenkig angebunden sind.

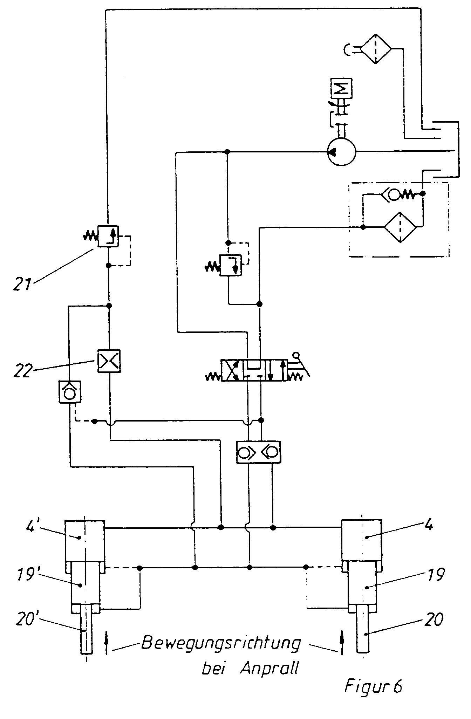

Gemäß Fig. 6 sind die Zylinder-Kolben-Einheiten 4, 4' als Teleskopzylinder mit querschnittsgrößeren Teleskopkolben 19, 19' und innerhalb dieser angeordneten, querschnittskleineren Teleskopkolben 20, 20' ausgebildet. Die Teleskopzylinder sind hierbei auf ein Hydrauliksystem geschaltet, wobei funktionswesentlich ein Überdruckventil 21 mit einem vorgeschalteten Drosselventil 22 vorgesehen ist. Im Kollisionsfall werden bei Erreichen einer gewissen Aufprallenergie die querschnittskleineren Teleskopkolben 20, 20' gegen den Widerstand des Überdruckventils 21 eingefahren, wobei die Aufprallenergie über das Drosselventil 22 vernichtet wird.

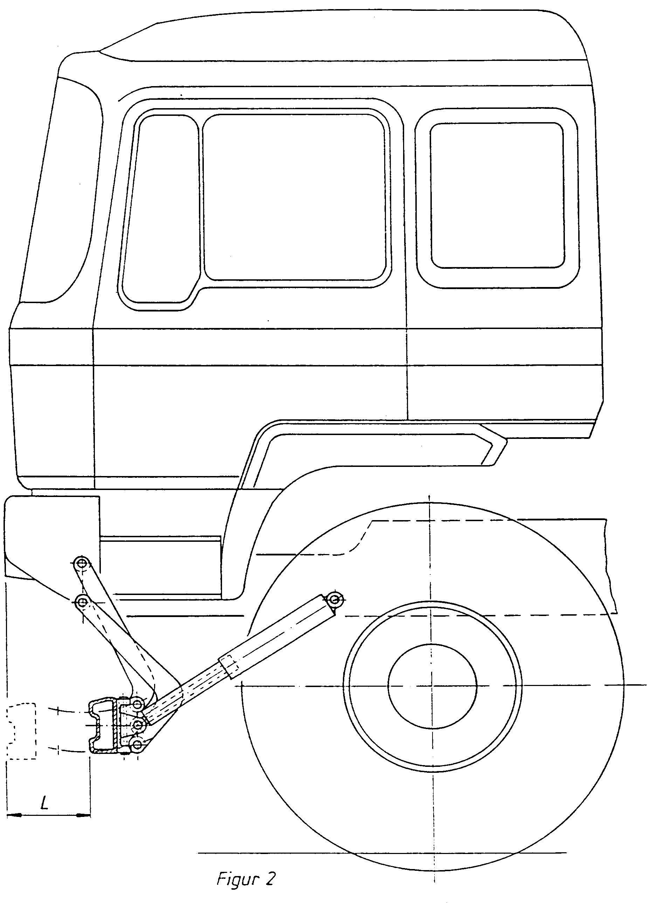

Die Hublänge der querschnittskleineren Teleskopkolben 20, 20' ist mit der nahezu horizontalen Knautschwegstrecke L abgestimmt ( siehe hierzu auch Fig. 2).

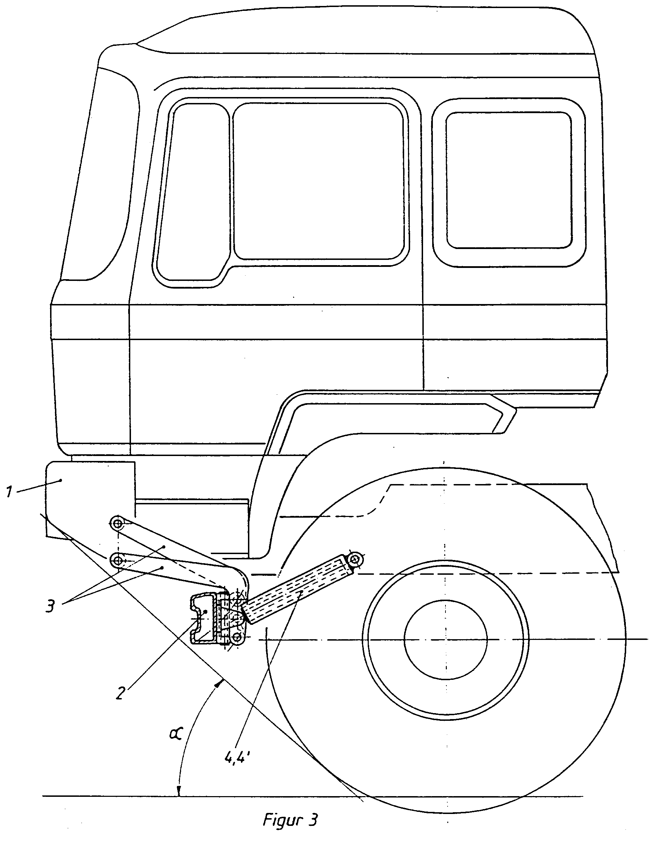

Gemäß Fig. 3 wird über das Einfahren der querschnittsgrößeren Teleskopkolben 19, 19' die niveauhöhere Endpostion des unteren Stoßfängers 2 erreicht. Der so hoch verstellte untere Stoßfänger 2 liegt eindeutig außerhalb des Böschungswinkels α, der durch die Tangente an Raddurchmesser und oberen Stoßfänger 1 charakterisiert ist.

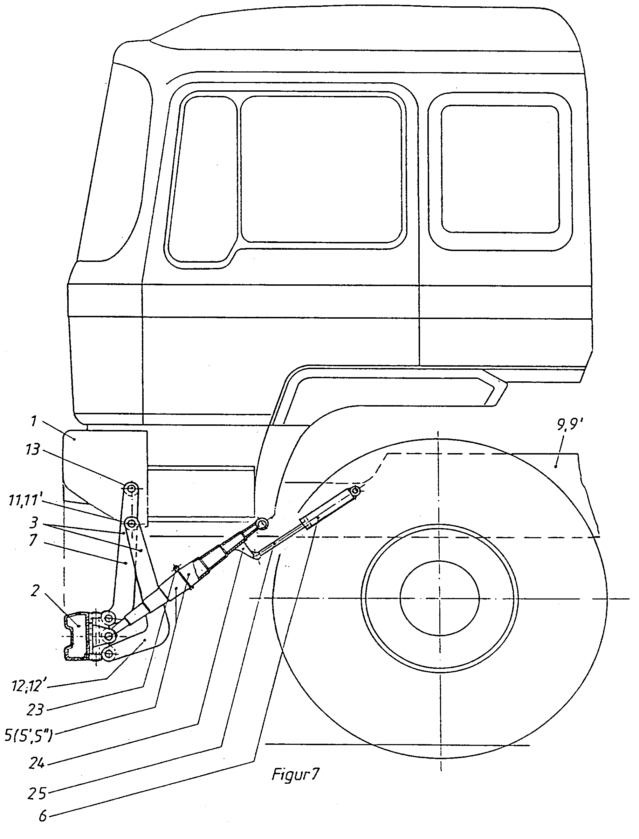

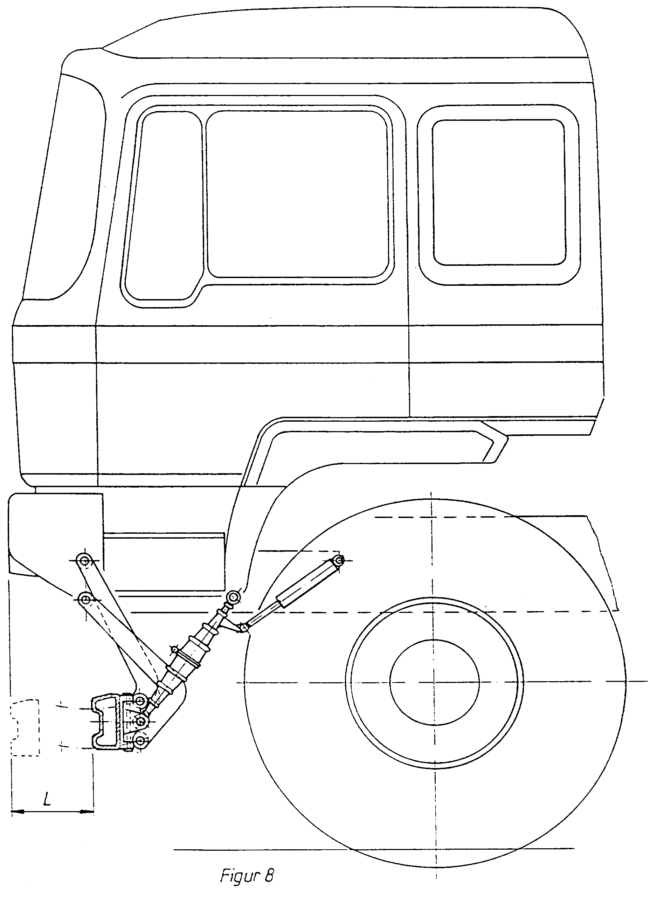

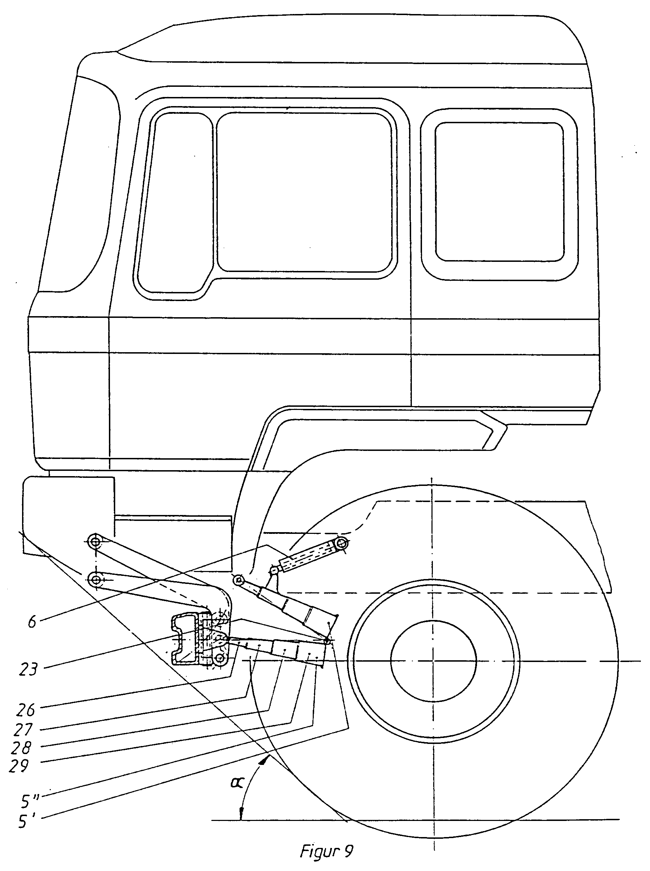

Die Fig. 7, 8, 9, 10 und 11 zeigen eine andere Ausführungsart der erfindungsgemäßen Aufprallvorrichtung. Die den unteren Stoßfänger 2 verschwenkbar lagernden Lenker 7 bzw. 12, 12' sind in der gleichen Art ausgeführt und angelenkt wie bei der vorstehend dargestellten Ausführung. Als Zylinder-Kolben-Einheiten sind, vergleichbar den hydraulischen Teleskopzylindern, zwecks Energievernichtung im Kollisionsfall und als Antriebsmechanismus für den unteren Stoßfänger 2, Knickhebel 5 vorgesehen. Diese sind über mit ihnen fest verbundene Laschen 24 durch Verstellelemente 6, welche hydraulisch, pneumatisch oder elektrisch betätigbar sind, somit entsprechend der Teleskopzylinder ebenfalls verstellbar. Die Knickhebel 5 bestehen aus den beiden um einen Drehpunkt 23 knickbaren Hälften 5' und 5''. Wird nun der Kolben 25 des Verstellelementes 6 eingezogen, so entsteht ein Moment am Drehgelenk 23 und der untere Stoßfänger 2 wird mittels der Lenker 7 bzw. 12, 12' in die hochgezogene Endposition verschwenkt, wobei die beiden Knickhebelhälften 5' und 5'' auseinanderknicken (siehe hierzu Fig. 9). Dieser Vorgang kann nur bewußt, d.h. in der Regel vom Fahrerstand aus, z.B. über einen elektrischen Schaltimpuls auf das Verstellelement 6, eingeleitet werden.

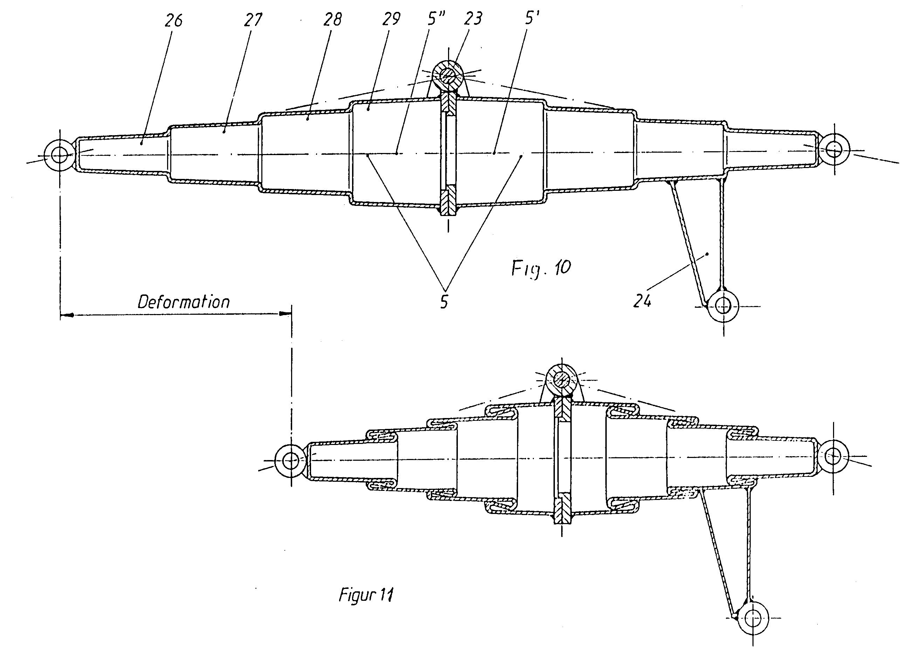

In der hier gezeigten Version ist der Knickhebel 5 doppelkegelförmig ausgebildet und weist abgestufte Rohrstücke 26, 27, 28, 29 oder ein entsprechendes Blechziehteil mit eingebauten Soll-Deformationsstellen auf. Fig. 10 zeigt den Knickhebel 5 im undeformierten und Fig. 11 im deformierten Zustand . Nach einer anderen, hier nicht gezeigten Version könnten die Knickhebelhälften auch teleskopartig geschachtelte, federgestützte Rohrstücke sein.

## Patentansprüche

1. Aufprallvorrichtung für Nutzfahrzeuge, insbesondere Lastkraftwagen, mit einem fliegend über Lenker am Rahmen aufgehängten, als Unterfahrschutz dienenden Stoßfänger, der über energieverzehrende Zylinder-Kolben-Einheiten mit dem Rahmen verbunden und aus einer Grundstellung geführt, durch die Lenker fahrzeugeinwärts in eine höhere Position verschwenkbar ist, dadurch gekennzeichnet, daß der Unterfahrschutz durch einen unterhalb eines oberen Stoßfängers (1) angeordneten unteren Stoßfänger (2) gebildet ist, der mittig fliegend über wenigstens zwei hängend mittelbar am Rahmen gelagerte Lenker (7 bzw. 12, 12') aufgehängt ist, wobei die obenendige Lagerung der beiden Lenker (7 bzw. 12, 12') über im wesentlichen vertikal übereinander beabstandete rahmenfeste Drehachsen (11, 11' bzw. 13) und die untenendige Lagerung der beiden Lenker (7 bzw. 12, 12') über im wesentlichen vertikal übereinander beabstandete, unterfahrtchutzseitig fest zugeordnete Drehachsen (15, 16) erfolgt, wobei ferner die unteren Drehachsen (15, 16) räumlich hinter dem unteren Stoßfänger (2) und in einer Vertikalebene gegeben sind, die vor einer durch die oberen Drehachsen (11, 11' bzw. 13) gehenden Vertikalebene liegt, so daß der untere Stoßfänger (2) abgestützt über die beiderseits seiner mittigen Aufhängung an ihm angreifenden Zylinder-Kolben-Einheiten (4, 4') um die oberen Drehachsen (11, 11' bzw. 13) geführt zunächst nahezu horizontal und dann in eine höhere Endposition bewegbar ist und dabei die unteren Drehachsen (15, 16) und damit auch der untere Stoßfänger (2) in Vertikallage verbleiben.

2. Aufprallvorrichtung nach Anspruch 1, dadurch gekennzeichnet, daß der untere Stoßfänger (2) zusätzlich um eine vertikale Drehachse (17) in horizontaler Ebene verschwenkbar ist und diese Drehachse (17) an einem die unteren Drehachsen (15, 16) der beiden Lenker (7 bzw. 12, 12') aufweisenden Lagerbock (14) gegeben ist.

3. Aufprallvorrichtung nach Anspruch 2, dadurch gekennzeichnet, daß der eine Lenker durch zwei gleichgestaltete Lenker (12, 12'), je einen beiderseits und im Abstand zu der Längsmittelebene des Nutzfahrzeuges angeordnet, gebildet ist, wobei diese Lenker (12, 12') an einem an einer Quertraverse (8) des Rahmens (9, 9') befestigten Lagerbock (10) in den Drehachsen (11, 11') angelenkt sind, und daß der andere Lenker durch einen einzelnen, mittig zwischen beiden Lenkern (12, 12') angeordneten Lenker (7) gebildet ist, der in der oberhalb der Drehachse (11) gelegenen Drehachse (13) ebenfalls am Lagerbock (10) angelenkt ist, und daß der - andernendes der Lenker (7 bzw. 12, 12') angelenkt angeordnete - Lagerbock (14) - um die vertikale Drehachse (17) verschwenkbar - mit einem am unteren Stoßfänger (2) befestigten Lagerbock (18) verbunden ist.

4. Aufprallvorrichtung nach Anspruch 1, dadurch gekennzeichnet, daß die Zylinder-Kolben-Einheiten (4, 4') als hydraulische Teleskopzylinder mit querschnittsgrößeren Teleskopkolben (19, 19') und querschnittskleineren Teleskopkolben (20, 20') ausgebildet sind, wobei die Wirklänge der querschnittskleineren Teleskopkolben (20, 20') auf den vorwiegend horizontal verlaufenden Schwenkweg L - Knautschzone - des unteren Stoßfängers (2) abgestimmt ist.

5. Aufprallvorrichtung nach einem der vorhergehenden Ansprüche, dadurch gekennzeichnet, daß zur Begrenzung der Aufprallenergie auf die Zylinder-Kolben-Einheiten (4, 4') innerhalb eines, letztere versorgenden Hydraulikkreislaufes ein Überdruckventil (21) vorgesehen ist, dem ein Drosselventil (22) vorgeschaltet ist.

6. Aufprallvorrichtung nach Anspruch 1, dadurch gekennzeichnet, daß die Zylinder-Kolben-Einheiten (4, 4') als Knickhebel (5) ausgebildet sind, denen jeweils ein Verstellelement (6) zugeordnet ist.

7. Aufprallvorrichtung nach Anspruch 6, dadurch gekennzeichnet, daß die Knickhebel (5) jeweils zweiteilig und um eine mittig angeordnete Achse (23) ausknickbar ausgebildet sind, und daß an ihren rahmenwärts gerichteten Enden Ausleger (24) angeordnet sind, an denen schwenkbar Kolben (25) der - an dem Rahmen (9, 9') schwenkbar angeordneten - Verstellelemente (6) befestigt sind.

8. Aufprallvorrichtung nach einen der Ansprüche 6 oder 7, dadurch gekennzeichnet, daß die Verstellelemente (6) hydraulisch, pneumatisch oder elektrisch beaufschlagbar sind.

9. Aufprallvorrichtung nach einem der Ansprüche 6 oder 7, dadurch gekennzeichnet, daß die Knickhebel (5) doppelkegelförmig mit abgestuften Rohrstücken (26, 27, 28, 29) oder als entsprechendes Blechziehteil mit eingebauten Soll-Deformationsstellen ausgebildet sind.

## Claims

1. A collision arrangement for commercial vehicles, in particular lorries, with a bumper used as chassis protection and attached so as to be suspended by guide rods on the frame, and being connected to the frame by way of energy-dissipating cylinder-piston units and being conveyed from a starting position, and being pivotable by the guide rods into a higher position and into the vehicle, **characterised in tha**t the chassis protection is formed by a lower bumper (2) arranged below an upper bumper (1) and attached in the centre so as to be suspended by at least two guide rods (7 or 12, 12') indirectly supported on the frame so as to be suspending, wherein the top ends of the two guide rods (7 or 12, 12') are supported by way of pivot pins (11, 11' or 13) spaced substantially vertically one above the other and secured to the frame, and the bottom ends of the two guide rods (7 or 12, 12') are supported by way of pivot pins (15, 16) spaced substantially vertically one above the other and fixed relative to the chassis protection, wherein the lower pivot pins (15, 16) are also arranged spatially behind the lower bumper (2) and in a vertical plane situated upstream of a vertical plane traversing the upper pivot pins (11, 11' or 13), so that the lower bumper (2) supported by the cylinder-piston units (4, 4') on both sides of its central suspension, which cylinder-piston units act upon the said bumper, is conveyed initially almost horizontally about the upper pivot pins (11, 11' or 13) and is then movable into a higher final position, and the lower pivot pins (15, 16) meanwhile remain in a vertical orientation and as does the lower bumper (2).

2. A collision arrangement according to Claim 1, **characterised in that** the lower bumper (2) is also pivotable in the horizontal plane about a vertical pivot pin (17), and this pivot pin (17) is provided on a bearing block (14) having the lower pivot pins (15, 16) of the two guide rods (7 or 12, 12').

3. A collision arrangement according to Claim 2, **characterised in tha**t one guide rod is formed by two identically-formed guide rods (12, 12') arranged one on each side of, and at a distance from, the longitudinal centre plane of the commercial vehicle, wherein these guide rods (12, 12') are articulated about the pivot pins (11, 11') to a bearing block (10) fastened to a transverse beam (8) of the frame (9, 9'), and that the other guide rod is formed by a single guide rod (7) arranged mid-way between the two guide rods (12, 12') and is also articulated, about the pivot pin (13) located above the pivot pin (11), to the bearing block (10), and that the bearing block (14) is arranged so as to be articulated at the other ends of the guide rods (7 or 12, 12'), is pivotable about the vertical pivot pin (17) and is connected to a bearing block (18) attached to the lower bumper (2).

4. A collision arrangement according to Claim 1, **characterised in that** the cylinder-piston units (4, 4') are in the form of hydraulic telescopic cylinders having telescopic pistons (19, 19') with a relatively large cross-section and telescopic pistons (20, 20') with a relatively small cross-section, wherein the operative length of the telescopic pistons (20, 20') with a relatively small cross-section is adjusted to the substantially horizontal pivotal path L - crusher zone - of the lower bumper (2).

5. A collision arrangement according to any one of the preceding Claims, **characterised in that** an overpressure valve (21) is provided to limit the collision energy on the cylinder-piston units (4, 4') within a hydraulic circuit supplying the said cylinder-piston units, and a throttle valve (22) is arranged upstream of the said valve.

6. A collision arrangement according to Claim 1, **characterised in that** the cylinder-piston units (4, 4') are formed as articulated levers (5), and a respective adjusting member (6) is associated therewith.

7. A collision arrangement according to Claim 6, **characterised in that** the articulated levers (5) are in two respective parts and can be articulated about a centrally-arranged pin (23), and that arms (24) are arranged on their ends directed towards the frame, and pistons (25) of the adjusting members (6), pivotably arranged on the frame (9, 9'), are pivotably fastened to the arms.

8. A collision arrangement according to one of Claims 6 or 7, **characterised in that** the adjusting members (6) can be acted upon hydraulically, pneumatically or electrically.

9. A collision arrangement according to one of Claims 6 or 7, **characterised in that** the articulated levers (5) have a double conical shape with staggered tube members (26, 27, 28, 29) or are formed as a suitable drawn sheet-metal part with integrated nominal deformation points.

## Revendications

1. Dispositif pare-chocs pour véhicule utilitaire, notamment camion, comportant un pare-chocs suspendu de manière flottante par des bras au châssis et constituant une protection sous la caisse, et qui est relié au châssis par des vérins absorbant l'énergie et est conduit d'une position de base pour pivoter sur les bras, vers l'intérieur du véhicule dans une position relevée, caractérisé en ce que la protection de bas de caisse est formée par un parechocs (2) inférieur situé en dessous d'un pare-chocs supérieur (1), et qui est suspendu flottant au milieu par au moins deux bras (7 ou 12, 12') reliés directement au châssis, le palier de l'extrémité supérieure des deux bras (7 ou 12, 12') étant assuré par des axes de rotation (11, 11' ou 13) verticalement superposés, à distance, solidaires du châssis et le palier à l'extrémité inférieure des deux bras (7 ou 12, 12') est assuré par des axes de rotation (15, 16) verticalement superposés à distance et solidaires du côté de la protection du bas de caisse, et en outre les axes de rotation inférieurs (15, 16) sont situés dans l'espace derrière le pare-chocs inférieur (2) et dans un plan vertical situé devant un plan vertical passant par les axes de rotation supérieurs (11, 11' ou 13) si bien que le pare-chocs inférieur (2), soutenu par les deux vérins (4, 4') agissant sur lui de part et d'autre de sa suspension centrale, guidé autour des axes de rotation supérieurs (11, 11' ou 13), tout d'abord dans une direction pratiquement horizontale puis dans une position de fin de course relevée et les axes de rotation inférieurs (15, 16) et ainsi le pare-chocs inférieur (2) restent en position verticale.

2. Dispositif pare-chocs selon la revendication 1, caractérisé en ce que le pare-chocs inférieur (2) peut en outre pivoter dans le plan horizontal autour d'un axe de rotation vertical (17) et cet axe de rotation (17) est prévu sur un bloc palier (14) comportant les deux axes de rotation inférieurs (15, 16) des deux bras (7 ou 12, 12').

3. Dispositif pare-chocs selon la revendication 2, caractérisé en ce que l'un des bras est formé par deux bras de même structure (12, 12') avec un bras de chaque côté et à distance du plan longitudinal médian du véhicule, ces bras (12, 12') étant articulés sur des axes de rotation (11, 11') d'un bloc palier (10) fixé à une traverse (8) du châssis (9, 9'), et en ce que l'autre bras est formé par un seul bras (7) prévu au milieu entre les deux bras (12, 12'), qui est articulé également sur le bloc palier (10), autour d'un axe de rotation (13) situé au-dessus de l'axe de rotation (11) et en ce que le bloc palier (14) (monté articulé à l'autre extrémité des bras (7 ou 12, 12'), pivotant autour de l'axe de rotation vertical (17), est relié à un bloc palier (18) fixé au pare-chocs inférieur (2).

4. Dispositif pare-chocs selon la revendication 1, caractérisé en ce que les vérins (4, 4') sont des vérins télescopiques hydrauliques à pistons télescopiques (19, 19') de grande section et des pistons télescopiques (20, 20') de petite section, la longueur active des pistons télescopiques (20, 20') de petite section étant accordée sur la course de pivotement essentiellement horizontale L-zone d'écrasement- du pare-chocs inférieur (2).

5. Dispositif pare-chocs selon l'une des revendications précédentes, caractérisé en ce que pour limiter l'énergie du choc sur les vérins (4, 4'), à l'intérieur d'un circuit hydraulique alimentant ces vérins, il est prévu une soupape de surpression (21) précédée par une soupape d'étranglement (22).

6. Dispositif pare-chocs selon la revendication 1, caractérisé en ce que les vérins (4, 4') sont en forme de leviers pliants (5) auxquels est associé respectivement un élément de réglage (6).

7. Dispositif pare-chocs selon la revendication 6, caractérisé en ce que les leviers pliants (5) sont chaque fois en deux parties et peuvent plier autour d'un axe médian (23) et des bras (24) sont associés à leur extrémité située du côté du châssis, bras auxquels est relié le piston pivotant (25) des éléments de réglage (6) (eux-mêmes montés pivotants sur le châssis (9, 9')).

8. Dispositif pare-chocs selon l'une des revendications 6 ou 7, caractérisé en ce que les éléments de réglage (6) sont à commande hydraulique, pneumatique ou électrique.

9. Dispositif pare-chocs selon l'une des revendications 6 ou 7, caractérisé en ce que les leviers pliants (5) sont des éléments tubulaires (26, 27, 28, 29) étagés en forme de double cônes ou de pièces de tôle étirées intégrant des points de déformation de consigne.
